# EUROPÄISCHE PATENTSCHRIFT

(11) **EP 3 730 363 B1**
(45) Veröffentlichungstag und Bekanntmachung des Hinweises auf die Patenterteilung: **28.09.2022**
(21) Anmeldenummer: 20167945.3
(22) Anmeldetag: 03.04.2020
(51) Int. Cl.: B60T 13/16

(54) **HYDRAULIKSYSTEM UND FAHRZEUG**
HYDRAULIC SYSTEM AND VEHICLE
SYSTÈME HYDRAULIQUE ET VÉHICULE

(30) Priorität: 10.04.2019 DE 102019205151
(43) Veröffentlichungstag der Anmeldung: 28.10.2020
(73) Patentinhaber: Deere & Company, Moline, IL 61265 (US)
(72) Erfinder: Meid, Michael, 68163 Mannheim (DE); Brueser, Christian, 68163 Mannheim (DE)
(74) Vertreter: Dehnhardt, Florian Christopher

(56) Entgegenhaltungen:
- EP-A2- 2 042 745
- EP-B1- 2 042 745
- WO-A1-2011/023028
- CN-A- 105 626 618
- DE-A1-102005 052 017
- DE-A1-102016 204 359
- US-A1- 2013 312 401
- US-A1- 2017 009 428

## Beschreibung

Die vorliegende Erfindung betrifft ein Hydrauliksystem eines Fahrzeugs mit einer ersten Pumpe zur Versorgung wenigstens eines ersten Hydraulikkreises und einer zweiten Pumpe zur Versorgung wenigstens eines zweiten Hydraulikkreises mit Hydraulikmittel, und ein Fahrzeug, insbesondere ein landwirtschaftliches oder industrielles Arbeitsfahrzeug, mit wenigstens einem Hydrauliksystem. Ein gattungsgemäßes Hydrauliksystems ist beispielsweise im Dokument DE 10 2016 204359 A1 offenbart.

Es ist bekannt, Brems- bzw. Lenkeinrichtungen an Fahrzeugen, insbesondere an landwirtschaftlichen oder industriellen Arbeitsfahrzeugen, wie beispielsweise Ackerschleppern, mittels Fremdenergie zu betreiben. Diese Fremdenergie wird üblicherweise über ein an Bord des Fahrzeugs befindliches Hydrauliksystem zur Verfügung gestellt. Für den Fall eines Ausfalls des Hydrauliksystems oder auch nur einer Pumpe des Hydrauliksystems und/oder eines Antriebs des Hydrauliksystems muss, insbesondere aus Sicherheitsgründen, weiterhin eine Möglichkeit vorhanden sein, das Fahrzeug zu bremsen und/oder zu lenken.

Hierfür sind an bekannten Fahrzeugen üblicherweise manuelle Notlenk-/Notbremsstufen oder zusätzliche (in den überwiegenden Fällen elektrisch oder über die Räder des Fahrzeugs angetriebene) Notpumpen vorgesehen. Dies ist aufwändig, kann zusätzliche Kosten erzeugen und/oder die Komplexität des Fahrzeugsystems erhöhen.

Die der Erfindung zugrundeliegende Aufgabe wird daher darin gesehen, ein Hydrauliksystem und ein Fahrzeug vorzusehen, durch welche die vorgenannten Nachteile überwunden werden.

Die Aufgabe wird erfindungsgemäß durch die Lehre der Patentansprüche 1 bzw. 10 gelöst. Weitere vorteilhafte Ausgestaltungen und Weiterbildungen der Erfindung gehen aus den Unteransprüchen hervor.

Diesbezüglich weist ein Hydrauliksystem eines Fahrzeugs eine erste Pumpe zur Versorgung wenigstens eines ersten Hydraulikkreises und eine zweite Pumpe zur Versorgung wenigstens eines zweiten Hydraulikkreises mit Hydraulikmittel auf, wobei die zweite Pumpe den ersten Hydraulikkreis im Notbetrieb bzw. bei einem Zusammenbrechen eines Ausgangsdrucks der ersten Pumpe, mit Hydraulikmittel versorgt. Auf diese Weise kann auf eine separate und/oder zusätzliche Pumpe, insbesondere eine Pumpe, die nur für den Fall eines Ausfalls der ersten Pumpe vorgehalten wird, verzichtet werden, da eine bereits für andere hydraulische Funktionen vorgesehene zweite Pumpe im Notbetrieb als optionale Notpumpe herangezogen wird. Die Funktion der zweiten Pumpe als Notpumpe im Notbetrieb kann dabei mehrere mögliche Fehler- oder auch Störungsfälle, beispielsweise den Ausfall der ersten Pumpe, aber auch den Ausfall eines Antriebs der Pumpe(n) abdecken. Diese zweite Pumpe kann so eine Zusatzfunktion zur bestehenden Versorgungsfunktion, beispielsweise eines Hydraulikkreises mit einer oder mehreren (weiteren) hydraulischen Funktion(en) erhalten. Eine derartige Ausführung eines Hydrauliksystems kann auch eine nahtlose Systemintegration der Notfunktion in das Gesamthydrauliksystem ermöglichen. Darüber hinaus kann auch auf ansonsten häufig notwendige Spezialisierungen verzichtet werden, wodurch die Gesamtsystemkosten weiterhin gesenkt werden können. Ein derartiges Hydrauliksystem kann als ein Mehrpumpensystem mit zwei Pumpen ausgebildet sein; es ist aber auch denkbar, dass weitere/mehrere Pumpen vorgesehen sind.

Versorgt der erste Hydraulikkreis wenigstens eine systemrelevante Komponente des Fahrzeugs, insbesondere eine Lenk- bzw. Bremseinrichtung und/oder der zweite Hydraulikkreis wenigstens eine weitere Funktions- bzw. Baugruppe des Fahrzeugs mit Hydraulikmittel, so kann die zweite Pumpe einen Notbetrieb dieser systemrelevanten Komponenten, insbesondere der Lenk- bzw. Bremseinrichtung, gewährleisten. Eine systemrelevante Komponente des Fahrzeugs kann insbesondere auch sicherheitsrelevant sein, beispielsweise in der Art, dass ein Ausfall einer derartigen Komponente eine erhöhte Unfallgefahr und/oder ein anderes Sicherheitsrisiko darstellen könnte.

Es kann alternativ oder auch zusätzlich vorgesehen sein, dass die zweite Pumpe im Notbetrieb ausschließlich den ersten Hydraulikkreis mit Hydraulikmittel beaufschlagt. Alternativ kann vorgesehen sein, dass durch die zweite Pumpe auch, vorzugsweise zumindest teilweise und/oder zeitweise, der zweite Hydraulikkreis mit Hydraulikmittel beaufschlagt wird. Auf diese Weise wird zumindest eine teilweise bzw. zeitweise Weiterführung der weiteren hydraulischen Funktionen, gegebenenfalls mit reduzierter Performance ermöglicht.

Besonders günstig ist es, wenn wenigstens eine der Pumpen als eine Pumpe mit variablem Fördervolumen ausgebildet ist. Vorzugsweise ist das Fördervolumen in Abhängigkeit von einem anstehenden Lastdruck regelbar, so dass das Fördervolumen bzw. die Förderleistung der Pumpe(n) sich aus Anforderungen des/der Verbraucher in dem/den Hydraulikkreis(en) ergibt.

Vorteilhafterweise ist wenigstens ein Umschaltventil vorgesehen, welches vorzugsweise in Abhängigkeit von einem Pumpenausgangsdruck geschaltet wird. Durch das Umschaltventil kann beispielsweise, insbesondere in Abhängigkeit von einem Pumpenausgangsdruck der ersten Pumpe, eine hydraulische Verbindung der zweiten Pumpe mit dem ersten Hydraulikkreis hergestellt werden. Das Hydrauliksystem kann aber auch ein oder mehrere weitere Umschaltventile aufweisen.

Es ist denkbar, dass die zweite Pumpe von einem Hauptantrieb angetrieben wird. Bei diesem Antrieb kann es sich beispielsweise um einen/den Antrieb des Fahrzeugs oder einen, auch separaten, Pumpenantrieb handeln. Es kann vorgesehen sein, dass der Hauptantrieb nur diese zweite Pumpe antreibt, vorzugsweise treibt er aber zumindest auch die erste Pumpe an. Es ist günstig, dass die zweite Pumpe aber auch über einen Notantrieb angetrieben werden kann, so dass die zweite Pumpe zumindest den ersten Hydraulikkreis auch bei einem Ausfall des Hauptantriebs mit Hydraulikmittel versorgen kann. Bei dem Notantrieb kann es sich beispielsweise um einen zusätzlichen Verbrennungs- oder Elektromotor handeln. Der Notantrieb kann aber auch in der Art eines Bodenantriebs ausgebildet sein und beispielsweise die Bewegungsenergie des Fahrzeugs nutzen.

Ist dem Hauptantrieb und/oder dem Notantrieb eine Kupplung zugeordnet, so kann der Hauptantrieb bzw. der Notantrieb wechselnd/selektiv mit der zweiten Pumpe verbunden werden. Die Kupplung kann dabei beispielsweise in der Art einer Freilaufkupplung, welche beispielsweise in Abhängigkeit von einer Eingangs-/Ausgangsdrehzahl eine Verbindung zwischen dem Hauptantrieb bzw. dem Notantrieb und der zweiten Pumpe herstellt. Die Kupplung kann aber auch als eine hydraulisch betätigte Kupplung ausgeführt sein, welche in geeigneter Art und Weise, beispielsweise hydraulisch oder elektronisch ansteuerbar vorgesehen ist.

Ist die zweite Pumpe mit dem Hauptantrieb und dem Notantrieb über ein Getriebe wirksam verbunden, so können Drehzahlunterschiede zwischen dem Hauptantrieb und dem Notantrieb ausgeglichen bzw. eine Drehzahl des Notantriebs an eine Drehzahl des Hauptantriebs angeglichen werden.

Es ist vorteilhaft, wenn ein Prioritätsventil vorgesehen ist, das im Notbetrieb vorzugsweise abhängig von einer Druckdifferenz zwischen dem ersten Hydraulikkreis und dem zweiten Hydraulikkreis überschüssiges Hydraulikmittel aus dem ersten Hydraulikkreis in den zweiten Hydraulikkreis leiten kann. Auf diese Weise kann im Notbetrieb bei einem Überschuss an Hydraulikmittel bzw. wenn die zweite Pumpe ein höheres Fördervolumen zur Verfügung stellen kann, als es für den Betrieb des/der Verbraucher in dem ersten Hydraulikkreis benötigt wird, auch Hydraulikmittel an den zweiten Hydraulikkreis geleitet und somit auch der/die Verbraucher in dem zweiten Hydraulikkreis mit Hydraulikmittel versorgt werden. Hierdurch kann ein voller Betrieb des/der Verbraucher in dem zweiten Hydraulikkreis oder ein Betrieb mit reduzierter Performance/eingeschränkter Funktion oder auch nur ein Aufrechterhalten von Grundfunktionen ermöglicht werden.

Ist an einem Fahrzeug wenigstens ein zuvor beschriebenes Hydrauliksystem vorgesehen, so kann dieses Hydrauliksystem auch in einem Notbetrieb bzw. wenn die erste Pumpe keinen bzw. einen zu geringen Pumpenausgangsdruck zur Verfügung stellt, einen Betrieb des/der Verbraucher in dem ersten Hydraulikkreis gewährleisten. Bei diesem/diesen Verbraucher(n) handelt es sich insbesondere um eine systemrelevante Komponente, insbesondere eine Lenk- bzw. Bremseinrichtung des Fahrzeugs. Bei dem Fahrzeug handelt es sich insbesondere um ein landwirtschaftliches oder industrielles Arbeitsfahrzeug, vorzugsweise in der Art eines Ackerschleppers oder Traktors. Es kann sich bei dem Fahrzeug aber auch um eine landwirtschaftliche Erntemaschine, eine selbstfahrende Spritze, ein Baufahrzeug, ein industrielles Transport-/Zugfahrzeug oder jedes andere Fahrzeug handeln, bei dem wenigstens eine erste und eine zweite Pumpe zur Versorgung von Verbrauchern vorgesehen sind.

Anhand der Zeichnung, die ein Ausführungsbeispiel der Erfindung zeigt, werden nachfolgend die Erfindung sowie weitere Vorteile und vorteilhafte Weiterbildungen der Erfindung und Ausgestaltungen der Erfindung näher beschrieben und erläutert.

Es zeigt:
Fig. 1 eine Seitenansicht eines landwirtschaftlichen Fahrzeugs,
Fig. 2 ein erstes Ausführungsbeispiel eines Hydrauliksystems des Arbeitsfahrzeugs,
Fig. 3 ein zweites Ausführungsbeispiel des Hydrauliksystems,
Fig. 4 ein drittes Ausführungsbeispiel eines Hydrauliksystems,
Fig. 5 ein viertes Ausführungsbeispiel eines Hydrauliksystems,
Fig. 6 ein fünftes Ausführungsbeispiel eines Hydrauliksystems und
Fig. 7 ein sechstes Ausführungsbeispiel eines Hydrauliksystems.

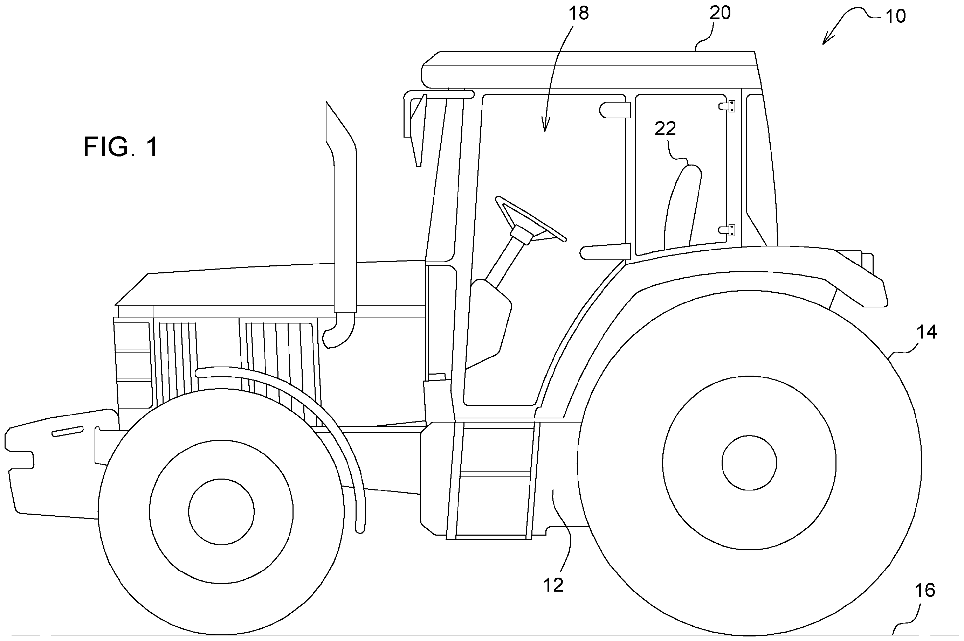

Figur 1 zeigt ein landwirtschaftliches Fahrzeug 10 in der Art eines Ackerschleppers oder Traktors mit einem Rahmen 12, der sich über vordere und rückwärtige Räder 14 auf dem Untergrund 16 abstützt. In einer Kabine 18 ist ein Bedienerarbeitsplatz 20 angeordnet. Das Fahrzeug 10 verfügt ferner über eine mittels Fremdkraft, im gezeigten Ausführungsbeispiel nur andeutungsweise gezeigte, hydraulisch betriebene Lenk- und Bremsanlage 22, über die eine nicht gezeigte Lenkung sowie nicht dargestellte Bremsen des Fahrzeugs 10 betätigt werden können.

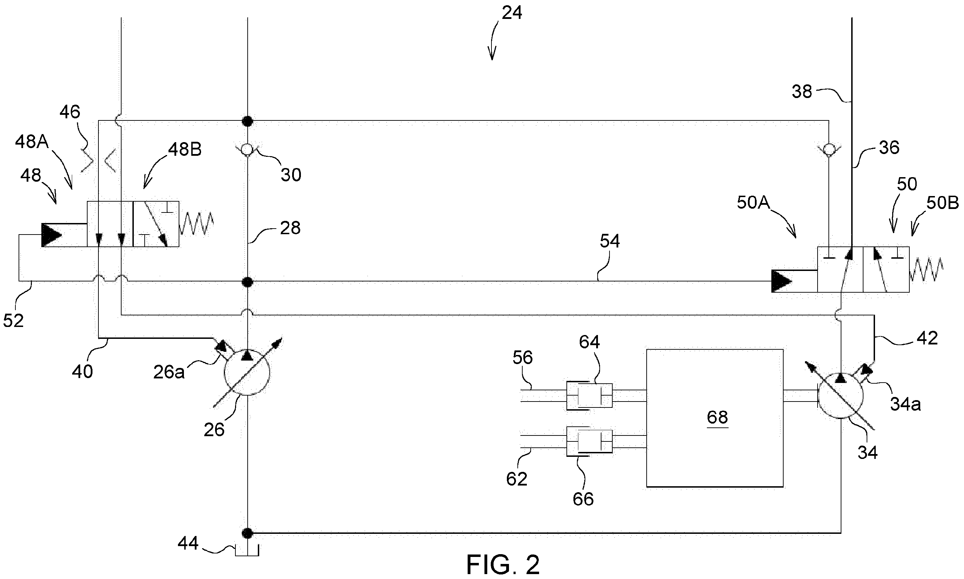

Mit Bezug auf die Figur 2 der Zeichnung soll nun ein erstes Ausführungsbeispiel eines Hydrauliksystems 24 des Fahrzeugs 10 genauer dargestellt werden. Das Hydrauliksystem 24 weist eine Haupthydraulikpumpe auf, die im Folgenden als erste Pumpe 26 bezeichnet werden wird, welche über eine erste Leitung 28, in der ein erstes Rückschlagventil 30 vorgesehen ist, mit einem die Lenk- und Bremsanlage 22 des Fahrzeugs 10 mit Hydraulikmittel versorgenden Hydraulikkreis 32 verbunden ist.

Weiter ist eine Zusatzpumpe vorgesehen, die im Folgenden als zweite Pumpe 34 bezeichnet werden wird, die über eine zweite Leitung 36 einen Hydraulikreis 38 bzw. weitere Funktions- bzw. Baugruppen des Fahrzeugs 10 mit Hydraulikmittel versorgt. Beide Pumpen 26, 34 sind als Pumpen mit variablem Fördervolumen ausgebildet, wobei das Fördervolumen jeweils durch einen Pumpenregler 26a, 34a abhängig von einem in jeweiligen Steuerleitung 40, 42 anstehenden Lastdruck geregelt wird. Beide Pumpen 26, 34 beziehen Hydraulikmittel aus einem Hydraulikmittelreservoir 44 des Fahrzeugs 10. Gemäß dem vorliegenden Ausführungsbeispiel ist in der der ersten Pumpe 26 zugeordneten Steuerleitung 40 eine optionale Lastdrucksignalblende 46 vorgesehen. Die Lastdruckblende 46 ist hier nur zur Veranschaulichung dargestellt. Normalerweise ist die Lastdruckblende 46 im Verbraucher, wie z.B. Lenkung oder Bremse integriert. Dies gilt für alle Ausführungsbeispiele.

Darüber hinaus sind ein erstes Umschaltventil 48 und ein zweites Umschaltventil 50 vorgesehen, welche in der Art druckabhängig schaltbarer, federbelasteter 4/2 bzw. 3/2 Wegeventile ausgebildet sind und die in Abhängigkeit davon, ob in einer jeweiligen Steuerleitung 52, 54 ein Druck ansteht, eine erste Stellung 48A, 50A bzw. wenn kein Druck ansteht, eine Stellung 48B, 50B einnehmen können.

Im Normalbetrieb werden beide Pumpen 26, 34 von einem Hauptantrieb 56 angetrieben. Die Umschaltventile 48, 50 werden über die Steuerleitungen 52, 54 derart mit Druck beaufschlagt, dass sie ihre jeweilige erste Stellung 48A, 50A einnehmen, in der die erste Pumpe 26 den Hydraulikkreis 32 und damit die Lenk- und Bremsanlage 22, und die zweite Pumpe 34 den Hydraulikkreis 38 mit Hydraulikmittel versorgen kann. Das Fördervolumen der Pumpen 26, 34 wird gemäß dem in den Steuerleitungen 40, 42 anstehenden Lastdruck in den Hydraulikkreisen 32, 38 geregelt. Der Lastdruck einer Steuerleitung (rechts oben am Ventil 48) wird im Normalbetrieb durch das Umschaltventil 48 an die zweite Pumpe 34 durchgeleitet.

Kommt es nun in einem ersten Notbetriebsfall zu einem Ausfall der ersten Pumpe 26, so steht auch in den Steuerleitungen 52, 54 der Umschaltventile 48, 50 aufgrund eines aus dem Ausfall der ersten Pumpe 26 resultierenden Druckabfalls nicht länger Druck an und die Umschaltventile 48, 50 nehmen ihre jeweilige federbelasteten Stellung 48B, 50B ein. Die zweite Pumpe 34 versorgt nun nicht länger den Hydraulikkreis 38, sondern vielmehr über eine ein Rückschlagventil 58 aufweisende Hydraulikleitung 60 den Hydraulikkreis 32 und damit die Lenk- und Bremsanlage 22. Das Rückschlagventil 58 ist nicht zwangsweise erforderlich, es stellt lediglich eine zusätzliche Sicherheitsmaßnahme im Fall eines Defekts des Umschaltventils 50 dar. Die Steuerleitung 42 der zweiten Pumpe 34 wird mit dem ersten Hydraulikkreis 32 verbunden, so dass das Fördervolumen der zweiten Pumpe 34 nun gemäß dem Lastdruck des ersten Hydraulikkreises 32 geregelt wird.

Kommt es in einem zweiten Notbetriebsfall zu einem Ausfall des Hauptantriebs 56, so steht auch hier in den Steuerleitungen 42, 54 nicht länger ein Druck an und die Umschaltventile 48, 50 nehmen, wie dies zuvor beschrieben wurde, ihre Stellung 48B, 50B ein. Die zweite Pumpe 34 kann in diesem Fall aber anstelle durch den Hauptantrieb 56 mittels eines Notantriebs 62, der beispielsweise als ein Elektromotor oder auch als Bodenantrieb ausgeführt sein kann, wie dies im Folgenden beschrieben wird, betrieben werden.

Gemäß dem vorliegenden Ausführungsbeispiel sind der Hauptantrieb 56 und der Notantrieb 62 mit der zweiten Pumpe 34 über jeweilige, als Freilaufkupplungen ausgebildete, Kupplungen 64, 66 und ein abhängig von der Art des Notantriebs 62 optionales Getriebe 68 verbindbar. Im Normalbetrieb kann das Getriebe 68 dafür sorgen, dass die maximale Drehzahl des Notantriebs 62 geringfügig unter der Leerlaufdrehzahl des Hauptantriebs 56 liegt. Dies kann aber beispielsweise bei einem als Elektromotor ausgebildeten Notantrieb 62 auch über eine entsprechende Ansteuerung des Notantriebs 62 erzielt werden. Fällt nun der Hauptantrieb 56 aus, so sinkt die Drehzahl unter die gewandelte Drehzahl des Notantriebs 62. Die Kupplung 64 des Hauptantriebs 56 rutscht durch und der Notantrieb 62 wird wirksam mit der Pumpe 34 verbunden.

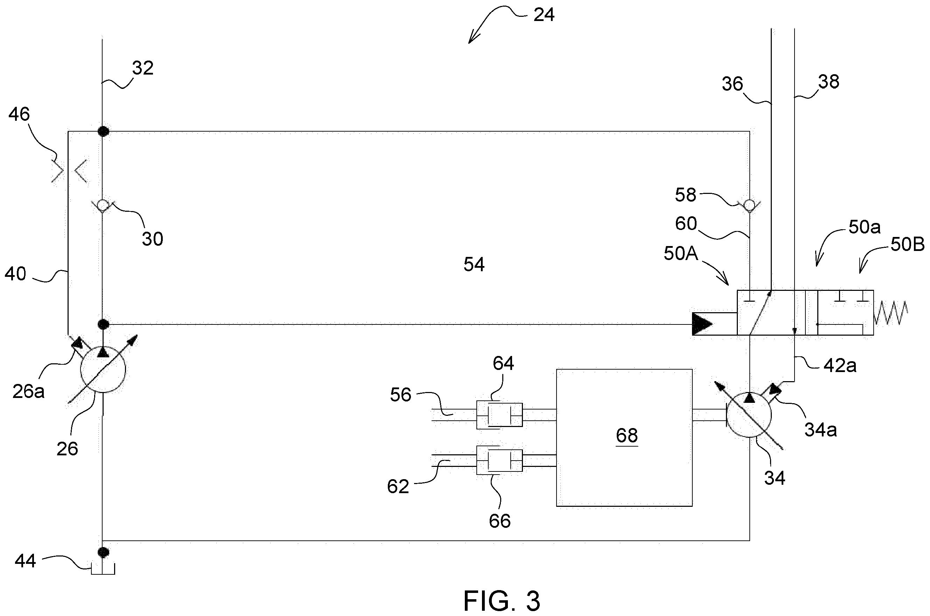

Es wird nun auch auf die Figur 3 der Zeichnung Bezug genommen, bei der für entsprechende Bauteile an den bisher verwendeten Referenzzeichen festgehalten wird, ähnliche Bauteile werden mit einem angefügten a gekennzeichnet. Im Gegensatz zu dem in Figur 2 gezeigten Hydrauliksystem 24 ist nun nur ein Umschaltventil 50a vorgesehen, welches der zweiten Pumpe 34 nachgeschaltet angeordnet und als 5/2 Wegeventil ausgebildet ist. Als Steuerdruck wird dem Umschaltventil 50a über eine Steuerleitung 54 der Pumpenausgangsdruck der ersten Pumpe 26 zugeleitet.

Im Normalbetrieb versorgt die erste Pumpe 26 über eine erste Leitung 28, in der ein erstes Rückschlagventil 30 vorgesehen ist, den ersten Hydraulikkreis 32 bzw. die Lenk- bzw. Bremsanlage 22 mit Hydraulikmittel. Auch hier wird dem Pumpenregler 26a der ersten Pumpe 26 über eine Steuerleitung 40 ein Steuerdruck zur Verfügung gestellt. In der Steuerleitung 54 des Umschaltventils 50a steht der Pumpenausgangsdruck der ersten Pumpe 26 an, so dass das Umschaltventil 50a eine erste Stellung 50A einnimmt, in der die zweite Pumpe 34 einen zweiten Hydraulikkreis 38 mit Hydraulikmittel versorgt.

Fällt die erste Pumpe 26 bzw. der Hauptantrieb 56 aus, so fällt der in der Steuerleitung 54 anstehende Druck ab und das Umschaltventil 50a wird durch Federwirkung in seine zweite Stellung 50B verbracht, in der die Pumpe 34 den Hydraulikkreis 32 über eine Hydraulikleitung 60 mit einem Rückschlagventil 58 mit Hydraulikmittel versorgt. Im Gegensatz zum ersten Ausführungsbeispiel findet im zweiten Ausführungsbeispiel im Notbetrieb keine lastabhängige Regelung der zweiten Pumpe 34 statt, da der zweiten Pumpe 34 über die Steuerleitung 42a im Notbetrieb lediglich ihr eigener Pumpenausgangsdruck zugeleitet wird. Der zweite Hydraulikkreis 38 wird nicht länger mit Hydraulikmittel versorgt.

Für einen Notbetrieb im Falle eines Ausfalls des Hauptantriebs 56 wird hinsichtlich des Antriebs der zweiten Pumpe 34 auf die entsprechende Beschreibung des ersten Ausführungsbeispiels Bezug genommen.

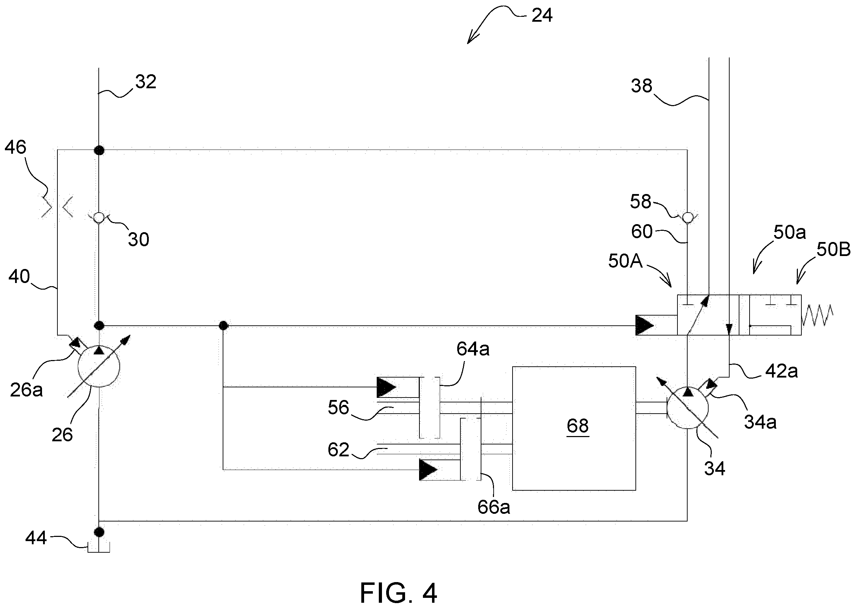

Es wird nun auch auf die Figur 4 der Zeichnung Bezug genommen, in der ein drittes Ausführungsbeispiel gezeigt wird, welches hinsichtlich Aufbau und Funktion des Hydrauliksystems 24 als solchem dem zweiten Ausführungsbeispiel entspricht.

Abweichend von dem ersten und dem zweiten Ausführungsbeispiel sind der Hauptantrieb 56 und der Notantrieb 62 mit der zweiten Pumpe 34 bzw. dem optionalen Getriebe 68 über hydraulisch betätigbare Kupplungen 64a, 66a wirksam verbindbar, wobei die den Hauptantrieb 56 zuschaltende Kupplung 64a schließt, wenn die erste Pumpe 26 über die Steuerleitung 54 die Kupplung 64a mit Druck beaufschlagt, und öffnet, wenn der Druck in der Steuerleitung 54 abfällt bzw. kein Druck ansteht. Die zweite Kupplung 66a, die den Notantrieb 62 zuschaltet, ist solange geöffnet, als in der Steuerleitung 54 ein Druck ansteht. Fällt aber die erste Pumpe 26 bzw. der Hauptantrieb 56 aus, so fällt der Druck in der Steuerleitung 54 ab, wodurch die Kupplung 66a schließt und den Notantrieb 62 direkt bzw. über das Getriebe 68 wirksam mit der zweiten Pumpe 34 verbindet.

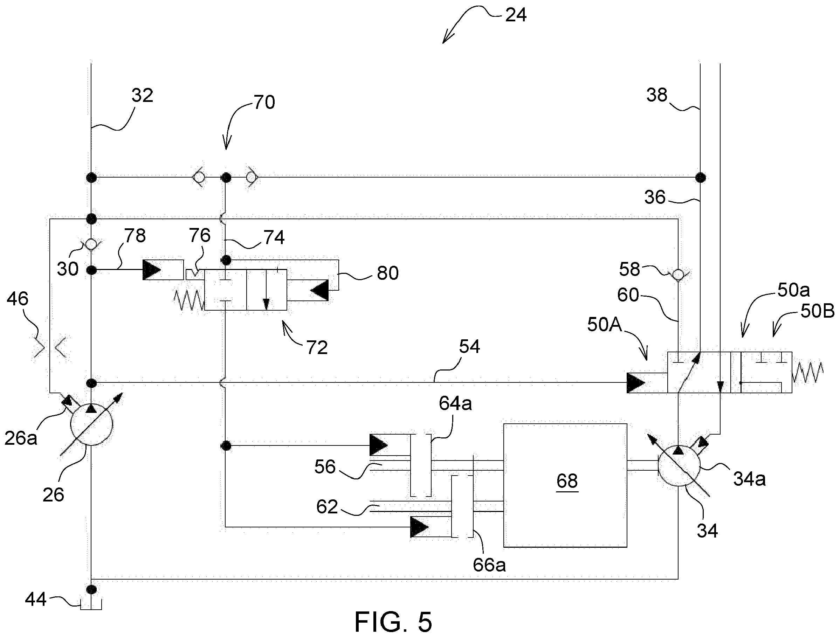

Mit Bezug auf die Figur 5 der Zeichnung wird im Folgenden ein viertes Ausführungsbeispiel beschrieben, welches im grundsätzlichen Aufbau dem Ausführungsbeispiel 2 entspricht, weshalb für gleiche Bauteile entsprechende Bezugszeichen verwendet werden. Darüber hinaus sind auch im vierten Ausführungsbeispiel hydraulische Kupplungen 64a, 66a vorgesehen, die in ihrer Wirkungsweise den in Figur 4 gezeigten Kupplungen 64a, 66b des dritten Ausführungsbeispiel entsprechen und daher mit den gleichen Referenzzeichen benannt werden.

Abweichend zu den in den Figuren 3 und 4 gezeigten Ausführungsbeispielen sind nun ein Wechselventil 70 und ein Kupplungsventil 72 vorgesehen. Das Wechselventil 70 ist zwischen der ersten Leitung 28, die die erste Pumpe 26 mit dem ersten Hydraulikreis 32 verbindet, und der zweiten Leitung 36 vorgesehen, die die zweite Pumpe 34 mit dem zweiten Hydraulikkreis 38 verbindet. Von dem Wechselventil 70 führt eine dritte Leitung 74 zu dem Kupplungsventil 72. Das Kupplungsventil 72 ist in der Art eines Ventils mit pilotierter hydraulischer Raste 76 ausgebildet. Die hydraulische Raste 76 des Kupplungsventils 72 kann durch den Pumpenausgangsdruck der Pumpe 26 über eine Steuerleitung 78 geöffnet werden, so dass im Normalbetrieb von der ersten Pumpe 26 Hydraulikmittel zu den Kupplungen 64a, 66a geleitet wird. Die dem Hauptantrieb 56 zugeordnete Kupplung 64a wird durch den durch das Kupplungsventil 72 durchgeleiteten Steuerdruck geschlossen, die des Notantriebs 62 zugeordnete Kupplung 66a geöffnet.

Wird von der ersten Pumpe 26 im Notbetrieb kein bzw. ein nicht länger (ausreichender) Druck geliefert, schaltet das zweite Umschaltventil 50a derart, dass der erste Hydraulikkreis 32 von der zweiten Pumpe 34 über die das zweite Rückschlagventil 58 aufweisende Leitung 60 mit Hydraulikmittel versorgt wird. Der von der zweiten Pumpe 34 gelieferte Pumpenausgangsdruck steht nun über eine Steuerleitung 80 an dem Kupplungsventil 72 an. Aufgrund des kontinuierlichen Steuerdrucks rastet die hydraulische Raste 76 des Kupplungsventils 72 nicht in eine geschlossene Stellung ein und die Kupplungen 64a, 66b verbleiben in ihren dem Normalbetrieb entsprechenden Stellungen.

Kommt es im Notbetrieb zu einem Versagen des Hauptantriebs 56, so liefern weder die erste Pumpe 26 noch die zweite Pumpe 34 (länger) Druck an das Hydrauliksystem bzw. der Pumpenausgangsdruck beider Pumpen 26, 34 bricht zusammen. Es steht somit an dem Kupplungsventil 72 in keiner der Steuerleitungen 78, 80 ein Steuerdruck an, so dass die federbelastete hydraulische Raste 76 des Kupplungsventils 72 einrastet und die Verbindung zwischen der Leitung 74 und den Kupplungen 64a, 66a trennt. Die dem Hauptantrieb 56 zugeordnete Kupplung 64a öffnet und die dem Notantrieb 62 zugeordnete Kupplung 66a schließt. Die zweite Pumpe 34 wird nun mittels des Notantriebs 62 betrieben.

Nach dem Anlaufen der zweiten Pumpe 34 im Notbetrieb verbleibt das Kupplungsventil 72 weiterhin in seiner Sperrstellung, in der es die Kupplungen 64a, 66b nicht mit Druck beaufschlagt, da die Raste 76 aufgrund des fehlenden Pumpenausgangsrucks der ersten Pumpe 26 nicht erneut öffnet. Hierdurch wird sichergestellt, dass durch den Pumpenausgangsdruck der zweiten Pumpe 34 nicht unbeabsichtigter Weise auf den Hauptantrieb 56 umschaltet wird.

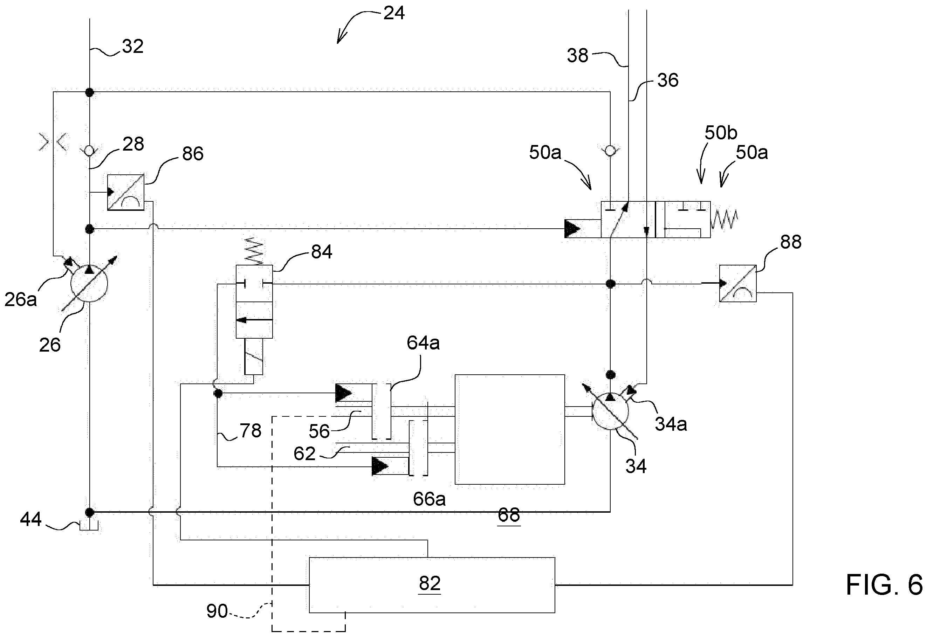

Figur 6 zeigt nun ein fünftes Ausführungsbeispiel, das in seinem Aufbau grundsätzlich an den Aufbau an das Ausführungsbeispiels 2 und hinsichtlich der Kupplungen an das Ausführungsbeispiel 3 angelehnt ist. Für entsprechende Bauteile werden daher erneut entsprechende Bezugszeichen verwendet.

In dem in der Figur 6 gezeigte Ausführungsbeispiel erfolgt eine Überwachung des Antriebszustands und gegebenenfalls eines Umschaltens der Kupplungen 64a, 66a mittels einer Auswerteelektronik 82. Die Auswerteelektronik 82 steuert über ein stromabwärts der zweiten Pumpe 34 angeordnetes und dem Umschaltventil 50a vorangestelltes in Richtung seiner Sperrstellung vorbelastetes Sperrventil 84 die Kupplungen 64a, 66a an. Das Sperrventil 84 ist in der Art eines 2/2-Wegeventils ausgebildet. In der ersten Leitung 28 ist stromaufwärts des ersten Rückschlagventils 30 ein erster Drucksensor 86 angeordnet, der mit der Auswerteelektronik 82 wirksam verbunden ist und der ermittelt, ob in der Leitung 28 ein Pumpenausgangsdruck der ersten Pumpe 26 ansteht. Ein zweiter, ebenfalls mit der Auswerteelektronik 82 wirksam verbundener Drucksensor 88 ermittelt, ob stromabwärts der zweiten Pumpe 34 ein Pumpenausgangsdruck der zweiten Pumpe 34 ansteht. Der Status des Hauptantriebs 56 wird der Auswerteelektronik 82 über eine nur andeutungsweise gezeigte CAN-Bus Verbindung 90 übermittelt.

Im Notbetrieb kann die zweite Pumpe 34 bei einem Ausfall der ersten Pumpe 26, der sich anhand der Sensordaten des ersten Drucksensors 86 ergibt, über den Hauptantrieb 56 angetrieben werden, wenn der Auswerteelektronik 82 über die CAN-Bus Verbindung 90 die Informationen vorliegt, das Pumpenausgangsdrucks der Hauptantrieb 56 funktioniert. Erhält die Auswerteelektronik 82 die Information, dass der Hauptantrieb 56 nicht bzw. nicht mehr funktioniert, steuert die Auswerteelektronik 82 das Sperrventil 84 entsprechend an, so dass die Kupplung 64a des Hauptantriebs 56 geöffnet und die Kupplung 66a des Notantriebs 62 geschlossen wird. Die zweite Pumpe 34 wird nun über den Notantrieb 62 angetrieben.

Durch eine Integration der Messung der Drehzahl des Hauptantriebs 56 können in dieser Variante beide Pumpen hinter dem Getriebe 68 angeordnet sein. Ein Ausfall des Hauptantriebs 56 führt in diesem Fall nur zu einer Umschaltung auf den Notantrieb 62. Bei einem Ausfall der ersten Pumpe 26 erfolgt die Umschaltung, wie bereits beschrieben, hydraulisch.

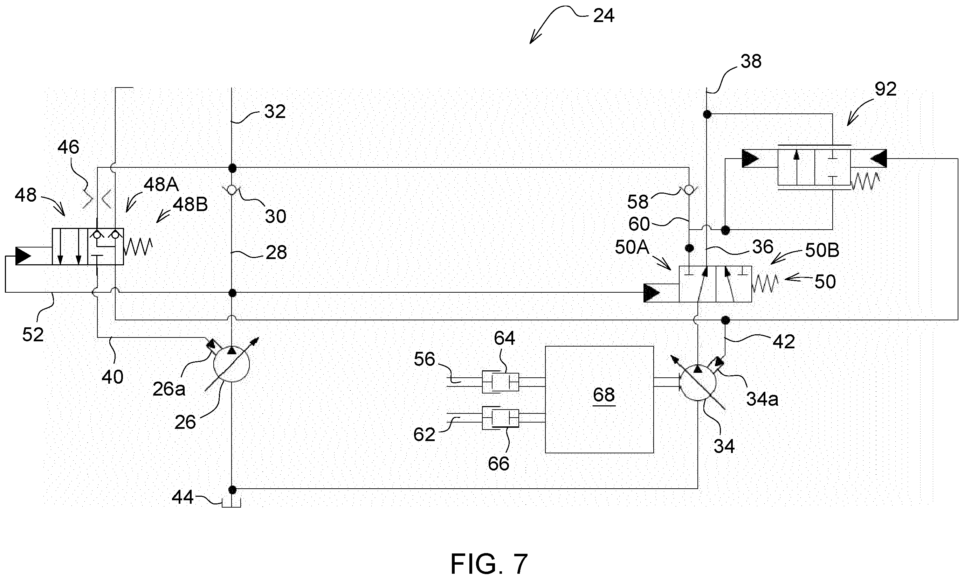

Es wird nun auch auf die Figur 7 der Zeichnung Bezug genommen, in der ein weiteres Ausführungsbeispiel dargestellt wird, das im Grundsatz dem ersten Ausführungsbeispiel entspricht. Dieses wird allerdings um ein Prioritätsventil 92 ergänzt, welches im Notbetrieb abhängig von einer zwischen den Hydraulikkreisen 32 und 38 bestehenden Druckdifferenz überschüssiges Hydraulikmittel aus dem ersten Hydraulikkreis 32 in den zweiten Hydraulikkreis 38 leitet, und damit eine Weiterversorgung der weiteren Funktions- bzw. Baugruppen des Fahrzeugs 10 ermöglicht. Im Normalbetrieb ist das Prioritätsventil 92 funktionslos. Darüber hinaus ist im Umschaltventil 48 noch ein Wechselventil integriert, welches den höchsten Lastdruck an die zweite Pumpe 34 sendet. Die Darstellung des Prioritätsventils 92 und des Umschaltventils 48 an einem Hydrauliksystem 24, gemäß dem ersten Ausführungsbeispiel, ist als beispielhaft zu betrachten. Ein derartiges Prioritätsventil 92 kann auch an jedem anderen der Hydrauliksysteme 24 der übrigen Ausführungsbeispiele eingesetzt werden.

## Patentansprüche

1. Hydrauliksystem (24) eines Fahrzeugs (10), mit einer ersten Pumpe (26) zur Versorgung wenigstens eines ersten Hydraulikkreises (32) und wenigstens einer zweiten Pumpe (34) zur Versorgung wenigstens eines zweiten Hydraulikkreises (38) mit Hydraulikmittel, wobei die zweite Pumpe (34) den ersten Hydraulikkreis (32) im Notbetrieb bzw. bei einem Ausfall eines Ausgangsdrucks der ersten Pumpe (26) mit Hydraulikmittel versorgt, **dadurch gekennzeichnet, dass** im Notbetrieb bzw. bei einem Ausfall eines Ausgangsdrucks der ersten Pumpe (26) eine Steuerleitung (42) der zweiten Pumpe (34) mit dem ersten Hydraulikkreis (32) verbunden wird, so dass das Fördervolumen der zweiten Pumpe (34) gemäß dem Lastdruck des ersten Hydraulikkreises (32) geregelt wird.

2. Hydrauliksystem nach Anspruch 1, **dadurch gekennzeichnet, dass** der erste Hydraulikkreis (32) wenigstens eine systemrelevante Komponente des Fahrzeugs (10), insbesondere eine Lenk- bzw. Bremsanlage (18) und/oder dass der zweite Hydraulikkreis (38) weniges eine weitere Funktions- bzw. Baugruppe des Fahrzeugs (10) mit Hydraulikmittel versorgt.

3. Hydrauliksystem nach Anspruch 1 oder 2, **dadurch gekennzeichnet, dass** die zweite Pumpe (34) im Notbetrieb ausschließlich den ersten Hydraulikkreis (32) oder auch, vorzugsweise zumindest teilweise und/oder zeitweise, den zweiten Hydraulikkreis (38) mit Hydraulikmittel beaufschlagt.

4. Hydrauliksystem nach Anspruch 1 oder 2, **dadurch gekennzeichnet, dass** wenigstens eine der Pumpen (26, 34) als eine Pumpe mit variablem Fördervolumen ausgebildet ist, wobei das Fördervolumen vorzugsweise in Abhängigkeit von einem anstehenden Lastdruck regelbar ist.

5. Hydrauliksystem nach einem der der vorherigen Ansprüche, **gekennzeichnet durch** wenigstens ein Umschaltventil (48, 50, 50a), welches vorzugsweise in Abhängigkeit von einem Pumpenausgangsdruck geschaltet wird.

6. Hydrauliksystem nach Anspruch 5, **dadurch gekennzeichnet, dass** durch das Umschaltventil (48) mit integriertem Wechselventil der höhere Lastdruck aus dem ersten Hydraulikkreis (32) und dem zweiten Hydraulikkreis (26) an die zweite Pumpe (34) gemeldet wird.

7. Hydrauliksystem nach einem der vorherigen Ansprüche, **dadurch gekennzeichnet, dass** die zweite Pumpe (34) alternativ durch einen Hauptantrieb (56) oder einen Notantrieb (62) angetrieben werden kann.

8. Hydrauliksystem nach Anspruch 7, **dadurch gekennzeichnet, dass** dem Hauptantrieb (56) und/oder dem Notantrieb (62) eine Kupplung (64, 64a, 66, 66a) zugeordnet, welche beispielsweise in der Art einer Freilaufkupplung oder einer hydraulischen Kupplung, welche in geeigneter Art und Weise, beispielsweise hydraulisch oder elektronisch ansteuerbar vorgesehen ist.

9. Hydrauliksystem nach Anspruch 7 oder 8, **dadurch gekennzeichnet, dass** die zweite Pumpe (34) mit dem Hauptantrieb (56) und dem Notantrieb (62) über ein Getriebe (68) wirksam verbunden ist.

10. Hydrauliksystem nach einem der vorherigen Ansprüche, **dadurch gekennzeichnet, dass** die erste Pumpe (26) und die zweite Pumpe (34) mit dem Hauptantrieb (56) und dem Notantrieb (62) über ein Getriebe (68) wirksam verbunden sind.

11. Hydrauliksystem nach einem der vorherigen Ansprüche, **gekennzeichnet durch** ein Prioritätsventil (92), das im Notbetrieb vorzugsweise abhängig von einer Druckdifferenz zwischen dem ersten Hydraulikkreis (32) und dem zweiten Hydraulikkreis (26) überschüssiges Hydraulikmittel aus dem ersten Hydraulikkreis (32) in den zweiten Hydraulikkreis (38) leiten kann.

12. Fahrzeug (10), insbesondere ein landwirtschaftliches oder industrielles Arbeitsfahrzeug, mit wenigstens einem Hydrauliksystem (24) nach einem der vorherigen Ansprüche.

## Claims

1. Hydraulic system (24) of a vehicle (10), having a first pump (26) for supplying at least one first hydraulic circuit (32) and at least one second pump (34) for supplying at least one second hydraulic circuit (38) with hydraulic medium, wherein the second pump (34) supplies the first hydraulic circuit (32) with hydraulic medium in the emergency mode or when an output pressure of the first pump (26) fails, **characterized in that**, in the emergency mode or when an output pressure of the first pump (26) fails, a control line (42) of the second pump (34) is connected to the first hydraulic circuit (32) such that the delivery volume of the second pump (34) is controlled according to the load pressure of the first hydraulic circuit (32).

2. Hydraulic system according to Claim 1, **characterized in that** the first hydraulic circuit (32) supplies at least one system-relevant component of the vehicle (10), in particular a steering or braking system (18), with hydraulic medium, and/or **in that** the second hydraulic circuit (38) supplies at least one further functional assembly or subassembly of the vehicle (10) with hydraulic medium.

3. Hydraulic system according to Claim 1 or 2, **characterized in that** the second pump (34) supplies only the first hydraulic circuit (32) or also, preferably at least partially and/or temporarily, the second hydraulic circuit (38) with hydraulic medium in the emergency mode.

4. Hydraulic system according to Claim 1 or 2, **characterized in that** at least one of the pumps (26, 34) is in the form of a pump with a variable delivery volume, wherein the delivery volume is controllable preferably in accordance with an applied load pressure.

5. Hydraulic system according to one of the preceding claims, **characterized by** at least one changeover valve (48, 50, 50a), which is switched preferably in accordance with a pump output pressure.

6. Hydraulic system according to Claim 5, **characterized in that** the higher load pressure of the first hydraulic circuit (32) and the second hydraulic circuit (26) is signalled to the second pump (34) by the changeover valve (48), which has an integrated shuttle valve.

7. Hydraulic system according to one of the preceding claims, **characterized in that** the second pump (34) can alternatively be driven by a main drive (56) or an emergency drive (62).

8. Hydraulic system according to Claim 7, **characterized in that** the main drive (56) and/or the emergency drive (62) is/are assigned a clutch (64, 64a, 66, 66a), which is provided, for example, in the form of a freewheel clutch or a hydraulic clutch, which is controllable in a suitable manner, for example hydraulically or electronically.

9. Hydraulic system according to Claim 7 or 8, **characterized in that** the second pump (34) is operatively connected to the main drive (56) and to the emergency drive (62) via a gearbox (68).

10. Hydraulic system according to one of the preceding claims, **characterized in that** the first pump (26) and the second pump (34) are operatively connected to the main drive (56) and to the emergency drive (62) via a gearbox (68).

11. Hydraulic system according to one of the preceding claims, **characterized by** a priority valve (92), which can direct excess hydraulic medium out of the first hydraulic circuit (32) and into the second hydraulic circuit (38) in the emergency mode, preferably in accordance with a pressure difference between the first hydraulic circuit (32) and the second hydraulic circuit (26).

12. Vehicle (10), in particular an agricultural or industrial vehicle, having at least one hydraulic system (24) according to one of the preceding claims.

## Revendications

1. Système hydraulique (24) d'un véhicule (10), comprenant une première pompe (26) pour alimenter au moins un premier circuit hydraulique (32) et au moins une deuxième pompe (34) pour alimenter au moins un deuxième circuit hydraulique (38) en fluide hydraulique, la deuxième pompe (34) alimentant en fluide hydraulique le premier circuit hydraulique (32) en mode de secours ou en cas de défaillance d'une pression de sortie de la première pompe (26), **caractérisé en ce qu'**en mode de secours ou en cas de défaillance d'une pression de sortie de la première pompe (26), une ligne de commande (42) de la deuxième pompe (34) est reliée au premier circuit hydraulique (32) de telle sorte que le volume de refoulement de la deuxième pompe (34) est réglé en fonction de la pression de charge du premier circuit hydraulique (32).

2. Système hydraulique selon la revendication 1, **caractérisé en ce que** le premier circuit hydraulique (32) alimente en fluide hydraulique au moins un composant important pour le système du véhicule (10), en particulier une installation de direction ou de freinage (18) et/ou **en ce que** le deuxième circuit hydraulique (38) alimente en fluide hydraulique au moins un autre groupe fonctionnel ou module du véhicule (10).

3. Système hydraulique selon la revendication 1 ou 2, **caractérisé en ce que** la deuxième pompe (34), en mode de secours, approvisionne en fluide hydraulique exclusivement le premier circuit hydraulique (32) ou également, de préférence au moins partiellement et/ou temporairement, le deuxième circuit hydraulique (38).

4. Système hydraulique selon la revendication 1 ou 2, **caractérisé en ce qu'**au moins l'une des pompes (26, 34) est configurée en tant que pompe à volume de refoulement variable, le volume de refoulement étant de préférence réglable en fonction d'une pression de charge présente.

5. Système hydraulique selon l'une quelconque des revendications précédentes, **caractérisé par** au moins une soupape de commutation (48, 50, 50a), qui est de préférence commutée en fonction d'une pression de sortie de pompe.

6. Système hydraulique selon la revendication 5, **caractérisé en ce que** la pression de charge plus élevée du premier circuit hydraulique (32) et du deuxième circuit hydraulique (26) est signalée à la deuxième pompe (34) par la soupape de commutation (48) avec soupape à deux voies intégrée.

7. Système hydraulique selon l'une quelconque des revendications précédentes, **caractérisé en ce que** la deuxième pompe (34) peut être entraînée en variante par un entraînement principal (56) ou un entraînement de secours (62).

8. Système hydraulique selon la revendication 7, **caractérisé en ce qu'**un accouplement (64, 64a, 66, 66a) est associé à l'entraînement principal (56) et/ou à l'entraînement de secours (62), par exemple sous la forme d'un accouplement à roue libre ou d'un accouplement hydraulique, qui est prévu de manière appropriée, par exemple à commande hydraulique ou électronique.

9. Système hydraulique selon la revendication 7 ou 8, **caractérisé en ce que** la deuxième pompe (34) est reliée activement à l'entraînement principal (56) et à l'entraînement de secours (62) par le biais d'une transmission (68).

10. Système hydraulique selon l'une quelconque des revendications précédentes, **caractérisé en ce que** la première pompe (26) et la deuxième pompe (34) sont reliées activement à l'entraînement principal (56) et à l'entraînement de secours (62) par le biais d'une transmission (68).

11. Système hydraulique selon l'une quelconque des revendications précédentes, **caractérisé par** une soupape de priorité (92) qui, en mode de secours, peut, de préférence en fonction d'une différence de pression entre le premier circuit hydraulique (32) et le deuxième circuit hydraulique (26), diriger le fluide hydraulique en excès du premier circuit hydraulique (32) vers le deuxième circuit hydraulique (38).

12. Véhicule (10), en particulier véhicule de travail agricole ou industriel, comprenant au moins un système hydraulique (24) selon l'une quelconque des revendications précédentes.
